(19) Europäisches Patentamt

European Patent Office

Office européen des brevets

(11) **EP 0 676 869 B1**

(12) **FASCICULE DE BREVET EUROPEEN**

(45) Date de publication et mention
de la délivrance du brevet:
**25.06.2003 Bulletin 2003/26**

(51) Int Cl.⁷: **H04B 7/005**

(21) Numéro de dépôt: **95400770.4**

(22) Date de dépôt: **06.04.1995**

(54) **Dispositif de traitement en réception avec bloc commutable de décision pour réduire la consommation de l'énergie**

Vorrichtung zur Empfangsverarbeitung mit umschaltbarem Entscheidungsblock zur Verringerung des Energieverbrauchs

Reception processing apparatus with switchable decision block for reduction of power consumption

(84) Etats contractants désignés:
**AT BE CH DE DK ES FR GB IT LI NL SE**

(30) Priorité: **11.04.1994 FR 9404230**

(43) Date de publication de la demande:
**11.10.1995 Bulletin 1995/41**

(73) Titulaire: **ALCATEL**
**75008 Paris (FR)**

(72) Inventeur: **Mourot, Christophe**
**F-92600 Asnières (FR)**

(74) Mandataire: **El Manouni, Josiane et al**
**Compagnie Financière Alcatel**
**Départememt de Propriété Industrielle,**
**5, rue Noel Pons**
**92734 Nanterre Cedex (FR)**

(56) Documents cités:
**EP-A- 0 415 897          US-A- 5 159 282**

• **PATENT ABSTRACTS OF JAPAN vol. 17 no. 642 (E-1466) ,29 Novembre 1993 & JP-A-05 207076 (NEC) 13 Août 1993,**

# Description

La présente invention concerne un dispositif de traitement en réception, pour système de télécommunication numérique, notamment pour système de radiocommunication numérique avec des mobiles.

Un tel dispositif de traitement peut, d'une façon générale, être défini comme comportant une chaîne de traitement formée d'un ensemble de blocs fonctionnels en cascade. Certains de ces blocs fonctionnels, dits ici de décision, sont aptes à prendre des décisions quant à la valeur des symboles d'information qu'ils reçoivent, en mettant en oeuvre des traitements destinés à minimiser les risques d'erreurs de décision dus aux diverses distorsions et/ou perturbations apportées par le canal de transmission.

Un exemple de tel bloc de décision est constitué par un égaliseur permettant de prendre des décisions quant à la valeur des symboles reçus, en mettant en oeuvre un traitement destiné plus particulièrement à minimiser les risques d'erreurs dus aux phénomènes d'interférence inter-symboles.

Un autre exemple de bloc de décision est constitué par un décodeur de canal permettant de prendre des décisions sur les symboles d'information issus de l'égaliseur, en mettant en oeuvre, en association avec un codeur de canal correspondant prévu à l'émission, une ou plusieurs techniques de protection contre les erreurs.

D'une manière générale, les blocs de décision d'un tel dispositif de traitement en réception sont toujours activés, quelle que soit la qualité du canal de transmission.

Il est cependant connu, du document EP 0415 897, de ne pas activer l'égaliseur dans le cas où la qualité du canal de transmission est bonne, afin de réduire dans ce cas la consommation du terminal de réception. Il est connu, du document JP-A-05 207 076, de ne pas activer l'egalisateur dans le cas où la qualité du canal de transmission est mauvaise.

Un des buts de la présente invention est de réduire la consommation du terminal de réception, également dans le cas de mauvaise qualité de transmission (la qualité de transmission s'entendant plus généralement ici comme la qualité de transmission des symboles reçus par un bloc de décision, cette qualité de transmission étant par exemple constituée par la qualité du canal de transmission dans le cas où ce bloc de décision est constitué par l'égaliseur).

Un autre but de la présente invention est d'obtenir, dans un tel cas de mauvaise qualité de transmission, une meilleure qualité de décision sur l'ensemble du dispositif de traitement en réception, et donc finalement une meilleure qualité de service pour l'utilisateur.

La présente invention a ainsi pour objet un dispositif de traitement en réception, notamment pour système de radiocommunication numérique avec des mobiles, du type comportant une chaîne de traitement formée d'un ensemble de blocs fonctionnels en cascade, dont certains, dits de décision, sont aptes à prendre des décisions quant à la valeur des symboles d'information qu'ils reçoivent, ce dispositif étant essentiellement caractérisé en ce qu'il comporte en outre :

- des moyens permettant, dans le cas de mauvaise qualité de transmission de symboles d'information reçus par un bloc de décision, de mettre ce bloc de décision hors de ladite chaîne de traitement et d'effacer la valeur des symboles d'information à traiter par le bloc suivant,

- des moyens permettant, à partir de symboles d'information effacés et de symboles d'information non effacés, reçus par ledit bloc suivant, de déterminer des valeurs probables pour les symboles d'information effacés.

D'autres objets et caractéristiques de la présente invention apparaîtront à la lecture de la description suivante d'exemples de réalisation, faite en relation avec les dessins ci-annexés dans lesquels :

- la figure 1 est un schéma illustrant un premier exemple d'application d'un dispositif suivant l'invention;
- la figure 2 illustre une variante du schéma de la figure 1;
- la figure 3 est un schéma illustrant un deuxième exemple d'application d'un dispositif suivant l'invention;
- la figure 4 est un schéma illustrant un troisième exemple d'application d'un dispositif suivant l'invention.

Pour simplifier, les éléments communs à ces différentes figures portent les mêmes références.

A titre d'exemple on considère plus particulièrement dans ce qui suit le cas d'application de la présente invention à un système de radiocommunication numérique avec des mobiles, du type GSM (Groupe Spécial Mobile). On rappelle brièvement que les informations numériques transmises dans un tel système sont obtenues, par exemple dans le cas où les signaux à transmettre sont des signaux de parole, en mettant en oeuvre successivement les opérations suivantes :

- application aux signaux de parole à transmettre d'un codage source, destiné à réduire la redondance naturelle des signaux de parole, et délivrant des entités appelées blocs de symboles,
- application d'un codage canal à ces blocs de symboles, en utilisant plus particulièrement une concaténation de plusieurs codes, le code externe (appliqué en premier lieu) étant en l'occurrence un code détecteur d'erreur, et le code interne (appliqué en dernier lieu) étant en l'occurrence un code correcteur d'erreurs de type convolutionnel, ce codage canal délivrant des blocs codés,

- entrelacement des blocs codés ainsi obtenus.

Ces blocs codés et entrelacés sont ensuite découpés en sous-blocs qui sont multiplexés avec d'autres informations telles que notamment une séquence d'apprentissage, pour constituer des entités de transmission appelées paquets, ces paquets étant placés dans ceux des intervalles de temps d'une structure de multiplex temporel qui leur sont alloués pour une communication donnée par ce système.

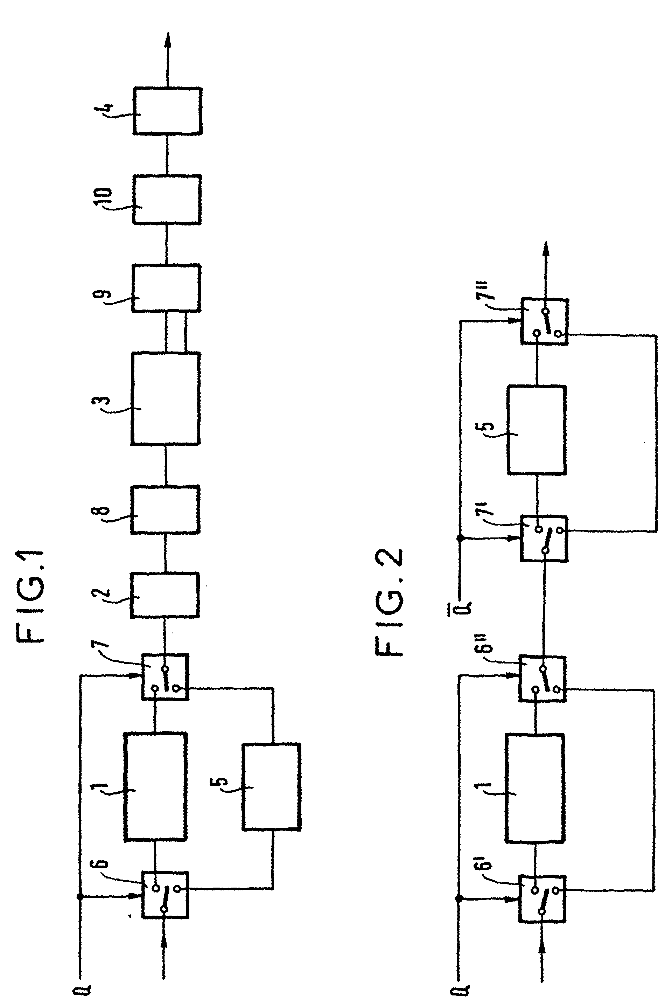

Le dispositif de traitement illustré sur la figure 1 comporte un égaliseur, 1, délivrant, de façon connue, à partir des symboles qu'il reçoit et d'une estimation de la réponse impulsionnelle du canal de transmission (obtenue elle-même à partir de ladite séquence d'apprentissage) des symboles égalisés.

Ce dispositif de traitement comporte également des moyens, 2, dits ici de désentrelacement et de restitution de blocs codés, permettant, de façon connue, à partir des symboles appartenant à plusieurs sous-blocs délivrés par l'égaliseur pour plusieurs paquets successifs, de restituer des blocs codés.

Ce dispositif de traitement comporte également des moyens de décodage canal, 3, opérant, de façon connue, sur les blocs codés délivrés par les moyens 2, dans l'ordre inverse des codages réalisés à l'émission.

Ce dispositif de traitement comporte également des moyens, 4, de décodage source recevant les blocs décodés issus des moyens de décodage canal et restituant, à partir de ces blocs décodés, des signaux de parole.

Le dispositif de traitement suivant l'invention illustré sur la figure 1 s'applique plus particulièrement au cas où le bloc de décision susceptible d'être mis hors de la chaîne de traitement, dans le cas de mauvaise qualité de transmission des symboles qu'il reçoit, est constitué par l'égaliseur.

Ce dispositif de traitement comporte ainsi en outre:

- des moyens permettant, dans le cas de mauvaise qualité de transmission des symboles reçus par l'égaliseur (c'est-à-dire en l'occurrence dans le cas de mauvaise qualité du canal de transmission) de mettre l'égaliseur hors de ladite chaîne de traitement et d'effacer la valeur des symboles d'information à traiter par le bloc suivant (c'est-à-dire en l'occurrence par les moyens 2 de désentrelacement et de restitution de blocs codés),
- des moyens permettant, à partir de symboles d'information non effacés et de symboles d'information effacés, de déterminer des valeurs probables pour les symboles d'information effacés, ces derniers moyens utilisant en l'occurrence, ainsi qu'il sera vu ultérieurement, la capacité de correction d'erreurs des moyens de décodage canal.

La qualité du canal de transmission peut être évaluée de diverses façons connues telles que par exemple :

- mesure de dispersion temporelle à partir de la réponse impulsionnelle estimée du canal de transmission,
- mesure de taux d'erreur binaire,
- mesure de rapport signal à bruit,
- mesure de rapport signal à interférence,
- plusieurs de ces mesures simultanément.

Dans l'exemple de réalisation illustré sur la figure 1, les moyens dits d'effacement, notés 5, pour effacer la valeur de symboles d'information, sont mis en parallèle sur l'égaliseur 1 et il est alors prévu un premier et un deuxième commutateur, respectivement 6 et 7, commandés en fonction de la qualité Q du canal de transmission, et permettant de mettre hors de la chaîne de traitement, soit l'égaliseur 1 dans le cas où cette qualité est mauvaise, soit les moyens d'effacement 5 dans le cas contraire.

Il serait néanmoins possible, comme illustré sur la figure 2, de disposer les moyens d'effacement 5 en série avec l'égaliseur, et de prévoir alors une première et une deuxième série de commutateurs, respectivement 6'-6" et 7'-7", commandées l'une en fonction de la qualité Q du canal de transmission, l'autre en fonction de l'inverse, $\overline{Q}$, de la qualité du canal de transmission, et permettant respectivement de mettre hors de la chaîne de traitement, l'égaliseur 1 dans le cas où la qualité du canal de transmission est mauvaise, et les moyens d'effacement 5 dans le cas contraire.

Suivant un exemple possible, l'égaliseur 1 délivre, pour chaque symbole reçu, un symbole égalisé ayant pour niveau logique l'un de n niveaux logiques dits significatifs prévus pour représenter l'information numérique transmise par ce symbole. A titre d'exemple, on se placera dans ce qui suit dans le cas de deux niveaux logiques correspondant aux valeurs binaires O et 1, soit dans le cas où n égal à 2.

Suivant cet exemple, lesdits moyens d'effacement 5 comportent des moyens pour remplacer le niveau logique d'un symbole par un niveau logique non significatif, reconnaissable en tant que tel par les moyens 2 de désentrelacement et de restitution de blocs codés.

Grâce au désentrelacement réalisé par ces moyens 2, des symboles d'information non effacés pourront se trouver intercalés entre des symboles d'information effacés, auquel cas le traitement effectué par les moyens permettant de déterminer des valeurs probables pour des symboles d'information effacés pourra se trouver facilité.

Le dispositif illustré sur la figure 1 comporte en outre des moyens, 8, permettant, à partir d'un bloc codé incluant p symboles effacés, issu des moyens 2, d'élaborer successivement 2P mots, ou blocs, codés comportant chacun, à la place des p valeurs effacées, ou non significatives, une des 2P combinaisons de valeurs significatives qu'il est possible de former pour p valeurs, et d'appliquer successivement ces 2P blocs codés à l'entrée des moyens 3 de décodage canal.

Les moyens 3 de décodage canal fournissent, pour chacun des blocs codés qui leur est appliqué, outre un bloc décodé, une indication de qualité de décodage de ce bloc (ce qui est symbolisé sur la figure 1 par deux traits distincts issus de ces moyens 3). Dans l'exemple d'application considéré où le code dit externe (appliqué en dernier lieu lors du décodage) est un code détecteur d'erreurs, une telle indication de qualité de décodage pourra consister en une indication relative au nombre d'erreurs détectées par le décodeur externe (ou dernier étage de décodage) des moyens de décodage canal.

Le dispositif de traitement illustré sur la figure 1 comporte en outre des moyens, 9, pour mémoriser les blocs décodés et les indicateurs de qualité de décodage correspondants fournis successivement par les moyens 3 de décodage canal pour les $2^P$ blocs codés qui leur sont appliqués.

Le dispositif de traitement illustré sur la figure 1 comporte en outre des moyens, 10, pour sélectionner celui des blocs décodés mémorisés dans les moyens 9, pour lequel la qualité de décodage (indiquée par l'indicateur de qualité de décodage correspondant) est la meilleure, ce bloc décodé étant ensuite appliqué aux moyens de décodage source 4.

Suivant un autre exemple possible, l'égaliseur 1 délivre, pour chaque symbole reçu, outre l'une des valeurs possibles pour ce symbole, un indicateur de qualité d'égalisation, ou indicateur de confiance, comme décrit par exemple, pour le cas d'un égaliseur mettant en oeuvre l'algorithme dit de Viterbi, dans le document "A Viterbi Algorithm with Soft-Decision Outputs" - J. Hagenauer, P.Hoeher - Proceedings of the IEEE - GLOB'COM 89 - Dallas, Texas - Nov.89-p 47.1.1 à 47.1.7.

Par exemple, si les valeurs possibles sont O et 1, l'ensemble formé par une valeur et par son indicateur de confiance pourra être, en décimal, une valeur entière comprise entre -7 et +7, -7 désignant un O sûr, +7 un 1 sûr.

Dans cet exemple, les moyens d'effacement 5 peuvent alors consister en des moyens permettant de remplacer un symbole d'information qui leur est appliqué, par une valeur correspondant, en décimal, à la valeur O.

Dans cet exemple, les moyens pour élaborer les diverses combinaisons de symboles possibles à partir d'un bloc codé comportant p symboles effacés, peuvent, dans le cas général, élaborer qx2P telles combinaisons, où q désigne le nombre de valeurs possibles pour un indicateur de confiance.

Pour limiter le volume de traitement, ce nombre pourra cependant être réduit par exemple à $2 \times 2^P$, en ne considérant, dans l'exemple numérique considéré ici, que les valeurs -1 et +1 au lieu de l'ensemble des valeurs -7 à +7.

Dans l'exemple de réalisation illustré sur la figure 1, les moyens 8, 9, et 10 forment, avec les moyens de décodage canal, lesdits moyens pour déterminer, à partir de symboles effacés et de symboles non effacés, des valeurs probables pour les symboles effacés.

On notera que les moyens 8, 9 et 10 peuvent ne pas être nécessaires si la capacité de correction du code correcteur d'erreurs utilisé est suffisante pour permettre de déterminer des valeurs probables pour des symboles effacés, auquel cas lesdits moyens pour déterminer, à partir de symboles effacés et de symboles non effacés, des valeurs probables pour les symboles effacés, consistent dans les moyens de décodage canal eux-mêmes. Dans le cas de moyens de décodage canal mettant en oeuvre un algorithme dit de Viterbi, une façon de procéder, en présence de symbole effacé, pourra consister à ne pas prendre en compte ce symbole effacé dans le calcul de métrique effectué pour le mot codé comportant ce symbole effacé.

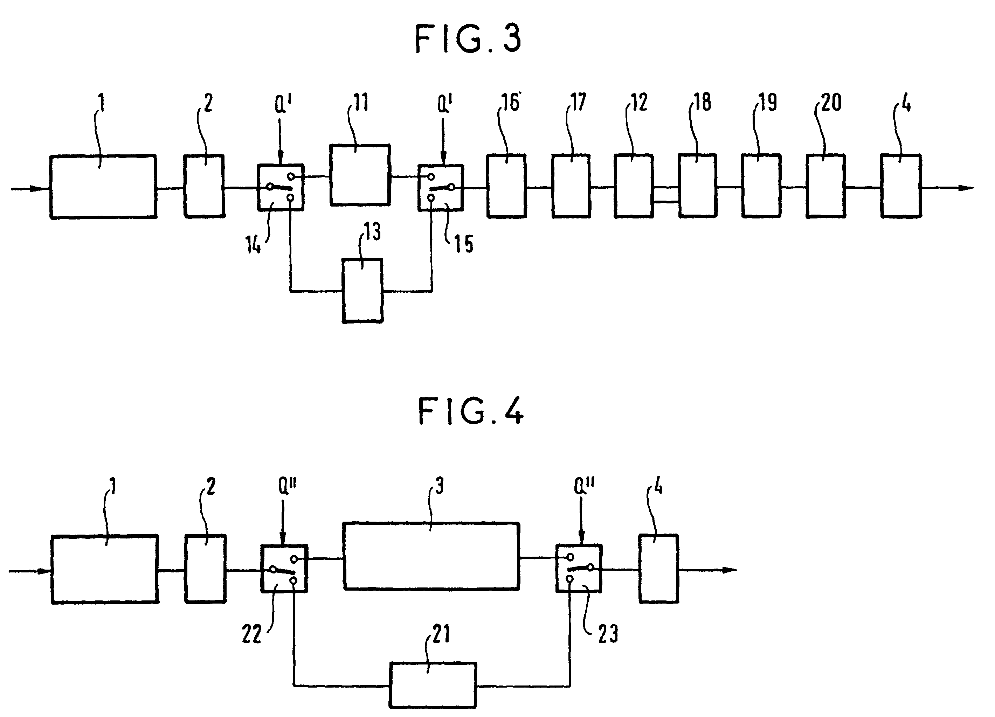

La figure 3 illustre l'application de l'invention au cas où le bloc de décision susceptible d'être mis hors de la chaîne de traitement dans le cas où la qualité de transmission des symboles qu'il reçoit est mauvaise, est constitué par le premier étage, noté 11, des moyens 3 de décodage canal, ce premier étage mettant en oeuvre, dans l'exemple d'application considéré au GSM et à la transmission de signaux de parole, un code correcteur d'erreurs de type convolutionnel.

Cette qualité de transmission, notée Q', peut être indiquée par un indicateur de qualité de décision prise par l'égaliseur, obtenu par exemple, dans le cas d'un égaliseur mettant en oeuvre l'algorithme dit de Viterbi, en faisant une moyenne d'indicateurs de confiance obtenus comme décrit dans le document cité ci-dessus. Cette qualité de transmission pourrait aussi, dans le cas d'un étage de décodage 11 mettant en oeuvre un algorithme dit de Viterbi, être déterminée en sortie de cet étage de décodage, à partir de la valeur finale de métrique du chemin, dit survivant, déterminé par cet algorithme.

Le dispositif illustré sur la figure 3 comporte ainsi :

- des moyens permettant, dans le cas où la qualité Q' est mauvaise, de mettre le premier étage 11 des moyens de décodage canal hors de la chaîne de traitement, et d'effacer les symboles à appliquer au bloc suivant, ce bloc suivant étant, dans l'exemple d'application considéré au GSM et à la transmission de parole, constitué par un deuxième étage, noté 12, de ces moyens de décodage canal, mettant en oeuvre un code correcteur d'erreur dit par blocs,
- des moyens permettant, à partir de symboles effacés et de symboles non effacés, de déterminer des valeurs probables pour ces symboles effacés.

Les moyens de mise hors de la chaîne de traitement, d'effacement et de détermination de valeurs probables pour des symboles effacés peuvent être similaires à ceux décrits en relation avec les figures 1 et 2, les moyens de détermination de valeurs probables pour des symboles effacés utilisant en l'occurrence, comme dans l'exemple d'application décrit précédemment, la capacité de correction d'un code correcteur d'erreurs, en l'occurrence le code correcteur d'erreurs mis en oeuvre par le deuxième étage de décodage.

On a ainsi noté sur la figure 3 :

-   13 des moyens d'effacement,
-   14 et 15 deux commutateurs commandés par la qualité de transmission Q' et permettant de mettre, soit l'étage de décodage 11, soit les moyens d'effacement 13, hors de la chaîne de traitement, suivant la qualité de transmission Q',
-   16 des moyens de désentrelacement dit intermédiaire (en supposant l'existence, à l'émission, d'un entrelacement dit intermédiaire entre les deux étages de codage correspondant au premier et au deuxième étage de décodage),
-   17 des moyens d'élaboration de $2^P$ mots codés à appliquer au deuxième étage de décodage 12, où p désigne le nombre de symboles effacés, dans un mot codé issu du premier étage 11, par les moyens d'effacement 13,
-   18 des moyens de mémorisation de mots décodés fournis successivement par l'étage de décodage 12 pour ces $2^P$ mots codés, ainsi que de la qualité de décodage correspondante (ce qui est symbolisé sur la figure 3 par deux traits distincts issu de l'étage de décodage 12),
-   19 des moyens de sélection de celui de ces mots décodés pour lequel la qualité de décodage est la meilleure, ce mot décodé étant en l'occurrence appliqué à un troisième étage, 20, de décodage du décodeur de canal, mettant en oeuvre, dans l'exemple d'application considéré au GSM et à la transmission de parole, un code détecteur d'erreurs.

On notera que dans le cas où les moyens d'effacement 13 utilisent, comme décrit plus haut, des indicateurs de confiance susceptibles d'être délivrés par le bloc de décision considéré (ici le premier étage de décodage 11) ces indicateurs de confiance pourront par exemple, dans le cas où ce premier étage met en oeuvre l'algorithme dit de Viterbi, être obtenus comme décrit dans le document cité ci-dessus.

On notera par ailleurs que les moyens 17, 18 et 19, ainsi d'ailleurs que les moyens de désentrelacement intermédiaire 16 et les moyens d'entrelacement intermédiaire correspondants à l'émission peuvent ne pas être nécessaires si la capacité de correction du code correcteur d'erreurs utilisé en l'occurrence par le deuxième étage de décodage de décodage est suffisante.

On notera par ailleurs que l'invention ne se limite pas, dans le cas de moyens de décodage à plusieurs étages, au cas illustré sur la figure 3 où le bloc de décision susceptible d'être mis hors de la chaîne de traitement est constitué par le premier de ces étages, et qu'elle ne se limite évidemment pas non plus au cas de trois étages correspondant à l'exemple d'application au GSM et à la transmission de parole.

La figure 4 illustre l'application de l'invention au cas où le bloc de décision susceptible d'être mis hors de la chaîne de traitement dans le cas où la qualité de transmission des symboles qu'il reçoit est mauvaise, est constitué par les moyens 3 de décodage canal.

Cette qualité de transmission, notée Q", peut être indiquée par un indicateur de qualité de décision prise par les moyens de décodage canal. Dans l'exemple d'application considéré au GSM et à la transmission de parole, où ledit code externe est un code détecteurs d'erreurs, cette indication de qualité pourra consister en une indication relative au nombre d'erreurs détectées par le décodeur externe (ou dernier étage de décodage) des moyens de décodage canal.

Le dispositif illustré sur la figure 4 comporte ainsi :

-   des moyens permettant, dans le cas où la qualité Q" est mauvaise, de mettre les moyens 3 de décodage canal hors de la chaîne de traitement, et d'effacer les symboles à appliquer au bloc suivant, en l'occurrence les moyens 4 de décodage source,
-   des moyens permettant à partir de symboles effacés et de symboles non effacés, de déterminer des valeurs probables pour ces symboles effacés.

Les moyens de mise hors de la chaîne de traitement et d'effacement peuvent être similaires à ceux décrits en relation avec les figures précédentes.

On a ainsi noté sur la figure 4 :

-   21 des moyens d'effacement,
-   22 et 23 deux commutateurs commandés par la qualité de transmission Q" et permettant de mettre, soit les moyens 3 de décodage canal, soit les moyens d'effacement 21, hors de la chaîne de traitement, suivant la qualité de transmission Q".

Les moyens pour déterminer des valeurs probables pour les symboles effacés utilisent en l'occurrence la redondance naturelle des signaux à transmettre et peuvent être constitués par des moyens permettant de réaliser une interpolation de blocs de symboles appliqués aux moyens de décodage source, comme décrit par exemple dans la Recommandation GSM 6.11 : "Substitution and muting of lost frames for full-rate speech traffic channels".

On notera que dans l'un ou l'autre des exemples d'application ainsi décrits, des moyens mis hors de la chaîne de traitement seront avantageusement désactivés en vue d'obtenir une réduction de la consommation du terminal de réception.

On pourra en outre avantageusement prévoir, dans le cas ou la qualité de transmission considérée n'est pas mauvaise, des moyens supplémentaires permettant :

- de mettre hors de la chaîne de traitement à la fois le bloc de décision considéré et les moyens d'effacement dans le cas où cette qualité de transmission est bonne,
- de ne pas mettre hors de la chaîne de traitement le bloc de décision considéré mais de mettre hors de cette chaîne de traitement les moyens d'effacement, dans le cas où cette qualité est moyenne.

A titre d'exemple dans la variante illustrée sur la figure 2 ces moyens supplémentaires consisteront simplement en une commande adéquate des commutateurs 6', 6", 7', 7" en fonction de la qualité de transmission considérée.

L'évaluation : bonne, moyenne ou mauvaise, de la qualité de transmission pourra être obtenue simplement en comparant cette qualité de transmission à un premier et un deuxième seuil, le cas où elle est supérieure au plus élevé de ces seuils correspondant à une bonne qualité, le cas où elle est comprise entre ces deux seuils correspondant à une qualité moyenne, et le cas où elle est inférieure au moins élevé de ces seuils correspondant à une mauvaise qualité.

On notera enfin que bien que la description qui précède ait été faite plus particulièrement dans le cas de l'application de la présente invention à un système de radiocommuniocation avec des mobiles, du type GSM, cette invention n'est évidemment pas liée à une telle application.

## Revendications

**1.** Dispositif de traitement en réception, notamment pour système de radiocommunication numérique avec des mobiles, du type comportant une chaîne de traitement formée d'un ensemble de blocs fonctionnels (1, 2, 3, 4) en cascade, dont certains, dits de décision, sont aptes à prendre des décisions quant à la valeur des symboles d'information qu'ils reçoivent, **caractérisé en ce qu'**il comporte en outre :

- des moyens (6, 7, 6', 6", 7', 7", 14, 15, 22, 23, 5, 13, 21) permettant, dans le cas de mauvaise qualité de transmission de symboles d'information reçus par un bloc de décision, de mettre ce bloc de décision hors de ladite chaîne de traitement et d'effacer la valeur des symboles d'information à traiter par le bloc suivant,
- des moyens (8, 9, 10, 17, 18, 19) permettant, à partir de symboles d'information effacés et de symboles d'information non effacés, reçus par ledit bloc suivant, de déterminer des valeurs probables pour les symboles d'information effacés.

**2.** Dispositif selon la revendication 1, **caractérisé en ce que** ledit bloc de décision est constitué par un égaliseur (1).

**3.** Dispositif selon la revendication 1, **caractérisé en ce que** ledit bloc de décision est constitué par des moyens de décodage canal (3).

**4.** Dispositif selon la revendication 1, **caractérisé en ce que** ledit bloc de décision est constitué par l'un des étages de décodage (11) de moyens de décodage canal comportant plusieurs étages mettant chacun en oeuvre l'un de plusieurs codes concaténés utilisés à l'émission.

**5.** Dispositif selon la revendication 1, **caractérisé en ce que** lesdits moyens d'effacement sont mis en parallèle sur ledit bloc de décision, par l'intermédiaire de commutateurs (6, 7, 14, 15, 22, 23) permettant de réaliser une mise hors de ladite chaîne de traitement, dudit bloc de décision dans le cas où ladite qualité de transmission est mauvaise, ou desdits moyens d'effacemement dans le cas contraire.

**6.** Dispositif selon la revendication 1, **caractérisé en ce que** lesdits moyens d'effacement sont mis en série avec ledit bloc de décision, et **en ce qu'**il est alors prévu en outre des moyens (7', 7") pour mettre lesdits moyens d'effacement hors de ladite chaîne de traitement dans le cas où ladite qualité de transmission n'est pas mauvaise.

**7.** Dispositif selon la revendication 1, **caractérisé en ce que**, ledit bloc de décision étant prévu pour délivrer, pour chaque symbole d'information reçu, l'un de n niveaux logiques dits significatifs prévus pour représenter l'information numérique transmise par ce symbole, lesdits moyens d'effacement comportent des moyens pour remplacer un symbole d'information par un niveau logique non significatif reconnaissable en tant que tel par le bloc suivant.

**8.** Dispositif selon la revendication 1, **caractérisé en ce que**, ledit bloc de décision étant prévu pour délivrer, pour chaque symbole reçu, un indicateur de qualité de décision prise par ce bloc de décision, lesdits moyens d'effacement comportent des moyens pour remplacer un symbole d'information par un indicateur de qualité de décision indiquant une mauvaise qualité de décision.

**9.** Dispositif selon la revendication 2, **caractérisé en**

**ce que** ledit égaliseur (1) étant suivi d'un bloc de décision constitué par des moyens de décodage canal (3), lesdits moyens pour déterminer des valeurs probables pour les symboles effacés comportent :

- des moyens (8) permettant, à partir d'un mot codé comportant p symboles effacés, d'élaborer un ensemble de mots codés appliqués successivement auxdits moyens de décodage canal, ces différents mots codés correspondant aux diverses combinaisons de symboles possibles pour les p symboles effacés,
- des moyens (9) pour mémoriser, pour chacun de ces mots codés, le mot décodé correspondant issu des moyens de décodage canal, ainsi qu'un indicateur de qualité de décodage correspondant,
- des moyens (10) pour sélectionner celui desdits mots décodés mémorisés dont l'indicateur de qualité de décodage indique la meilleure qualité de décodage.

**10.** Dispositif selon la revendication 2, **caractérisé en ce que**, ledit égaliseur étant suivi de moyens de décodage canal, lesdits moyens pour déterminer des valeurs probables pour des symboles effacés consistent dans lesdits moyens de décodage de canal eux-mêmes.

**11.** Dispositif selon la revendication 4, **caractérisé en ce que** ledit étage de décodage (11) étant suivi d'un bloc de décision constitué par l'étage de décodage suivant (12) desdits moyens de décodage canal, lesdits moyens pour déterminer des valeurs probables pour des symboles effacés comportent :

- des moyens (17) permettant, à partir d'un mot codé comportant p symboles effacés, d'élaborer un ensemble de mots codés appliqués successivement audit étage de décodage suivant, ces différents mots codés correspondant aux différentes combinaisons de symboles possibles pour les p symboles effacés,
- des moyens (18) pour mémoriser, pour chacun de ces mots codés, le mot décodé correspondant issu dudit étage de décodage suivant, ainsi qu'un indicateur de qualité de décodage correspondant,
- des moyens (19) pour sélectionner celui des mots décodés ainsi mémorisés dont l'indicateur de qualité de décodage indique la meilleure qualité de décodage.

**12.** Dispositif selon la revendication 4, **caractérisé en ce que** ledit étage de décodage (11) étant suivi d'un bloc de décision constitué par l'étage de décodage suivant (12) desdits moyens de décodage canal, lesdits moyens pour déterminer des valeurs probables pour des symboles effacés consistent dans ledit deuxième étage de décodage lui-même.

**13.** Dispositif selon la revendication 3, **caractérisé en ce que** lesdits moyens de décodage canal étant suivis d'un bloc de décision constitué par des moyens de décodage source (4), lesdits moyens pour déterminer des valeurs probables pour des symboles effacés consistent en des moyens permettant de réaliser une interpolation de blocs de symboles appliqués auxdits moyens de décodage source.

**14.** Dispositif selon l'une des revendications 1 à 13, **caractérisé en ce qu'**il comporte en outre des moyens pour mettre hors de ladite chaîne de traitement un bloc de décision dans le cas où la qualité de transmission des symboles reçus par ce bloc de décision est bonne, et pour ne pas mettre hors de ladite chaîne de traitement ce bloc dans le cas où cette qualité est moyenne.

**15.** Dispositif selon l'une des revendications 1 à 14, **caractérisé en ce qu'**il comporte en outre des moyens pour désactiver un bloc de décision mis hors de la chaîne de traitement.

**Patentansprüche**

**1.** Vorrichtung zur Empfangsverarbeitung, insbesondere für ein digitales Funkkommunikationssystem mit mobilen Endgeräten, vom Typ mit einer Verarbeitungskette, gebildet aus einer Anordnung von hintereinander geschalteten Funktionsblöcken (1, 2, 3, 4), von denen sogenannte Entscheidungsfunktionsblöcke in der Lage sind, Entscheidungen über den Wert von Informationssymbolen, die sie empfangen, zu treffen, **dadurch gekennzeichnet, dass** sie ferner umfasst:

- Mittel (6, 7, 6', 6'', 7', 7'', 14, 15, 22, 23, 5, 13, 21), die es im Fall einer schlechten Übertragungsqualität von von einem Entscheidungsblock empfangenen Informationssymbolen ermöglichen, diesen Entscheidungsblock aus der Verarbeitungskette zu nehmen und den Wert der vom folgenden Block zu verarbeitenden Informationssymbole zu löschen,
- Mittel (8, 9, 10, 17, 18, 19), die es ermöglichen, ausgehend von gelöschten Informationssymbolen und nicht gelöschten, von dem nächsten Block empfangenen Informationssymbolen wahrscheinliche Werte für die gelöschten Informationssymbole festzulegen.

**2.** Vorrichtung nach Anspruch 1, **dadurch gekennzeichnet, dass** der Entscheidungsblock durch einen Ausgleicher (1) gebildet ist.

**3.** Vorrichtung nach Anspruch 1, **dadurch gekennzeichnet, dass** der Entscheidungsblock durch Kanaldecodierungsmittel (3) gebildet ist.

**4.** Vorrichtung nach Anspruch 1, **dadurch gekennzeichnet, dass** der Entscheidungsblock durch eine der Decodierstufen (11) von Kanaldecodierungsmitteln gebildet ist, die mehrere Stufen umfassen, die jeweils einen der mehreren beim Senden verketteten Codes benutzen.

**5.** Vorrichtung nach Anspruch 1, **dadurch gekennzeichnet, dass** die Mittel zum Löschen mit dem Entscheidungsblock über Schalter (6, 7, 14, 15, 22, 23) parallel geschaltet sind, die es erlauben, bei schlechter Übertragungsqualität den Entscheidungsblock und im entgegengesetzten Fall die Löschmittel aus der Verarbeitungskette zu nehmen.

**6.** Vorrichtung nach Anspruch 1, **dadurch gekennzeichnet, dass** die Löschmittel mit dem Entscheidungsblock in Reihe geschaltet sind, und dass ferner Mittel (7', 7") vorgesehen sind, um in dem Fall, wo die Übertragungsqualität nicht schlecht ist, die Löschmittel aus der Verarbeitungskette zu nehmen.

**7.** Vorrichtung nach Anspruch 1, **dadurch gekennzeichnet, dass** der Entscheidungsblock vorgesehen ist, um für jedes empfangene Informationssymbol eines von n logischen Niveaus, als signifikantes Niveau bezeichnet, zu liefern, die vorgesehen sind, um die von diesem Symbol übertragene digitale Information darzustellen, und dass die Löschmittel Mittel umfassen, um ein Informationssymbol durch ein nicht signifikantes logisches Niveau zu ersetzen, das als solches durch den folgenden Block erkennbar ist.

**8.** Vorrichtung nach Anspruch 1, **dadurch gekennzeichnet, dass** der Entscheidungsblock vorgesehen ist, um für jedes empfangene Symbol einen Qualitätsindikator der von diesem Entscheidungsblock getroffenen Entscheidung zu liefern, und dass die Löschmittel Mittel umfassen, um ein Informationssymbol durch einen Entscheidungsqualitätsindikator zu ersetzen, der eine schlechte Entscheidungsqualität anzeigt.

**9.** Vorrichtung nach Anspruch 2, **dadurch gekennzeichnet, dass** auf den Ausgleicher (1) ein Entscheidungsblock folgt, der durch Kanaldecodiermittel (3) gebildet ist, wobei die Mittel zum Bestimmen der wahrscheinlichen Werte für die gelöschten Symbole umfassen:

- Mittel (8), die es erlauben, ausgehend von einem codierten Wort mit p gelöschten Symbolen eine Menge von codierten Wörtern zu erzeugen, die nacheinander an die Kanaldecodierungsmittel angelegt werden, wobei diese verschiedenen codierten Wörter den verschiedenen möglichen Kombinationen von Symbolen für die p gelöschten Symbole entsprechen,
- Mittel (9) zum Speichern, für jedes dieser codierten Wörter, des entsprechenden aus dem Kanaldecodierungsmittel hervorgegangenen decodierten Wortes sowie eines Indikators der Qualität der entsprechenden Decodierung,
- Mittel (10) zum Auswählen desjenigen der gespeicherten decodierten Wörter, dessen Indikator der Decodierqualität die beste Decodierqualität anzeigt.

**10.** Vorrichtung nach Anspruch 2, **dadurch gekennzeichnet, dass** auf den Ausgleicher Kanaldecodierungsmittel folgen, wobei die Mittel zum Bestimmen der wahrscheinlichen Werte für die gelöschten Symbole aus den Kanaldecodierungsmitteln selbst bestehen.

**11.** Vorrichtung nach Anspruch 4, **dadurch gekennzeichnet, dass** auf die Decodierstufe (11) ein Entscheidungsblock, gebildet durch die nächste Decodierstufe (12) der Kanaldecodierungsmittel, folgt, und dass die Mittel zum Bestimmen der wahrscheinlichen Werte für die gelöschten Symbole umfassen:

- Mittel (17), die es erlauben, ausgehend von einem codierten Wort mit p gelöschten Symbolen eine Menge von codierten Wörtern zu erzeugen, die nacheinander an die nächste Decodierstufe angelegt werden, wobei diese verschiedenen codierten Wörter den verschiedenen möglichen Kombinationen von Symbolen für die p gelöschten Symbole entsprechen,
- Mittel (18) zum Speichern, für jedes dieser codierten Wörter, des entsprechenden aus der nächsten Decodierstufe hervorgegangenen decodierten Wortes, sowie eines Indikators der Qualität der entsprechenden Decodierung,
- Mittel (19) zum Auswählen desjenigen der so gespeicherten decodierten Wörter, dessen Indikator der Decodierqualität die beste Decodierqualität anzeigt.

**12.** Vorrichtung nach Anspruch 4, **dadurch gekennzeichnet, dass** auf die Decodierstufe (11) ein Entscheidungsblock, gebildet durch die nächste Decodierstufe (12) der Kanaldecodierungsmittel, folgt, und dass die Mittel zum Bestimmen der wahrscheinlichen Werte für die gelöschten Symbole aus der zweiten Decodierstufe selbst bestehen.

**13.** Vorrichtung nach Anspruch 3, **dadurch gekennzeichnet, dass** auf die Kanaldecodierungsmittel ein Entscheidungsblock, gebildet durch Quelldecodiermittel (4), folgt, und dass die Mittel zum Bestimmen der wahrscheinlichen Werte für die gelöschten Symbole aus Mitteln bestehen, die eine Interpolation von an die Quelldecodiermittel angelegten Blöcken von Symbolen durchzuführen erlauben.

**14.** Vorrichtung nach einem der Ansprüche 1 bis 13, **dadurch gekennzeichnet, dass** sie ferner Mittel umfasst, um einen Entscheidungsblock in dem Fall, wo die Übertragungsqualität der von diesem Entscheidungsblock empfangenen Symbole gut ist, aus der Verarbeitungskette zu nehmen und diesen Block nicht aus der Verarbeitungskette zu nehmen, wenn diese Qualität mittelmäßig ist.

**15.** Vorrichtung nach einem der Ansprüche 1 bis 14, **dadurch gekennzeichnet, dass** sie ferner Mittel umfasst, um einen aus der Verarbeitungskette genommenen Entscheidungsblock zu deaktivieren.

**Claims**

**1.** A receive processor device, in particular for a digital mobile radio system, including a processor system comprising a set of functional units (1, 2, 3, 4) connected in cascade, some of which units are decision units adapted to make decisions as to the value of information symbols that they receive, **characterized in that** it also includes:

- means (6, 7, 6', 6", 7', 7", 14, 15, 22, 23, 5, 13, 21) for bypassing said decision unit in said processor system and for deleting the value of information symbols to be processed by the next unit if the transmission quality of information symbols received by a decision unit is poor, and
- means (8, 9, 10, 17, 18, 19) for determining from deleted information symbols and from undeleted information symbols received by said next unit probable values for the deleted information symbols.

**2.** A device according to claim 1 **characterized in that** said decision unit is an equalizer (1).

**3.** A device according to claim 1 **characterized in that** said decision unit comprises channel decoder means (3).

**4.** A device according to claim 1 **characterized in that** said decision unit is one decoder stage (11) of channel decoder means including a plurality of stages each using one of a plurality of concatenated codes used at the transmitter.

**5.** A device according to claim 1 **characterized in that** said delete means are connected in parallel with said decision unit by switches (6, 7, 14, 15, 22, 23) for bypassing said decision unit in said processor system if said transmission quality is poor or for bypassing said delete means otherwise.

**6.** A device according to claim 1 **characterized in that** said delete means are connected in series with said decision unit and **in that** means (7', 7") are therefore also provided for bypassing said delete means in said processor system if said transmission quality is not poor.

**7.** A device according to claim 1 **characterized in that** said decision unit is adapted to supply, for each information symbol received, one of n meaningful logic levels for representing the digital information transmitted by said symbol and said delete means include means for replacing an information symbol with a non-meaningful logic level recognizable as such by the next unit.

**8.** A device according to claim 1 **characterized in that** said decision unit is adapted to supply, for each symbol received, a decision quality indicator in respect of the decision made by said decision unit and said delete means include means for replacing an information symbol with a decision quality indicator that indicates poor decision quality.

**9.** A device according to claim 2 **characterized in that** said equalizer (1) is followed by a decision unit comprising channel decoder means (3) and said means for determining probable values for deleted symbols include:

- means (8) for producing, from a coded word comprising p deleted symbols, a set of coded words applied in succession to said channel decoder means, said coded words corresponding to various possible combinations of symbols for the p deleted symbols,
- means (9) for memorizing, for each of said coded words, the corresponding decoded word output by the channel decoder means and a corresponding decoding quality indicator, and
- means (10) for selecting the memorized decoded words for which the decoding quality indicator indicates the best decoding quality.

**10.** A device according to claim 2 **characterized in that** said equalizer is followed by channel decoder means and said means for determining probable values for deleted symbols comprise said channel decoder means.

**11.** A device according to claim 4 **characterized in that** said decoder stage (11) is followed by a decision unit comprising the next decoder stage (12) of said channel decoder means and said means for determining probable values for deleted symbols include:

- means (17) for producing, from a coded word including p deleted symbols, a set of coded words applied in succession to said next decoder stage, said coded words corresponding to different combinations of symbols for the p deleted symbols,
- means (18) for memorizing, for each of said coded words, the corresponding decoded word output by said next decoder stage and a corresponding decoding quality indicator, and
- means (19) for selecting the memorized decoded word for which the decoding quality indicates the best decoding quality.

**12.** A device according to claim 4 **characterized in that** said decoder stage (11) is followed by a decision unit comprising the next decoder stage (12) of said channel decoder means and said means for determining probable values for deleted symbols comprise said second decoder stage.

**13.** A device according to claim 3 **characterized in that** said channel decoder means are followed by a decision unit comprising source decoder means (4) and said means for determining probable values for deleted symbols comprise means for interpolating blocks of symbols supplied to said source decoder means.

**14.** A device according to any of claims 1 to 13 **characterized in that** it also includes means for bypassing a decision unit in said processor system if the transmission quality of the symbols received by said decision unit is good and for not bypassing said unit in said processor system if said quality is average.

**15.** A device according to any of claims 1 to 14 **characterized in that** it also includes means for deactivating a decision unit bypassed in the processor system.

FIG.1

FIG.2

EP 0 676 869 B1

FIG. 3

FIG. 4